# FASCICULE DE BREVET EUROPEEN

(11) **EP 0 558 786 B1**
(45) Date de publication et mention de la délivrance du brevet: **19.07.1995**
(21) Numéro de dépôt: 92103829.5
(22) Date de dépôt: 06.03.1992
(51) Int. Cl.: A01K 1/01

(54) **Appareil sanitaire ouvert pour chiens et chats**
Offene Toilette für Hunde und Katzen
Open toilet for dogs and cats

(43) Date de publication de la demande: 08.09.1993
(73) Titulaire: SOCIETE DES PRODUITS NESTLE S.A., 1800 Vevey (CH)
(72) Inventeur: Favreau, Jean, F-80800 Corbie (FR)

(56) Documents cités:
- EP-A- 0 209 474
- EP-A- 0 399 854
- DE-A- 2 740 867
- FR-A- 2 584 568

## Description

L'invention concerne un appareil sanitaire pour chiens et chats, du type ouvert, comprenant une partie sensiblement plane et horizontale pour le stationnement de l'animal, une partie verticale solidaire de ladite partie horizontale, des moyens de rinçage raccordés à une arrivée d'eau et un système d'évacuation des eaux usées.

Le brevet FR 2584568 concerne un autre système sanitaire pour animaux domestiques. Ce dispositif permet de minimiser l'intervention humaine dans son fonctionnement, il est d'un fonctionnement automatique et il garantit une propreté quasi parfaite. Par contre, il souffre de plusieurs inconvénients qui sont d'une part qu'il est compliqué et donc relativement cher à l'achat et d'autre part il confine l'animal dans une enceinte fermée, ce qui n'est pas souhaité compte tenu des études faites sur le comportement animal. Finalement, il a été également constaté que les animaux domestiques, surtout les chats, aiment faire leurs besoins sur une litière. Or, le dispositif précité ne prévoit pas la présence d'une telle litière.

L'appareil sanitaire, objet de la présente invention, permet de mettre à disposition des consommateurs, aussi bien dans des lieux d'habitation que dans des chatteries ou des chenils, un système peu onéreux, automatique, propre, garantissant à l'animal un bon degré de liberté et lui permettant de faire ses besoins sur une litière renouvelée après chaque nettoyage.

L'invention concerne un appareil sanitaire pour chats et chiens comprenant un réservoir à litière et son système de dosage pour la dépose de ladite litière sur la partie horizontale et au moins une cellule de détection de la présence de l'animal sur ladite partie horizontale, commandant, lorsque l'animal a quitté le plan horizontal, la séquence de rinçage et de réapprovisionnement de litière, les moyens de rinçage étant constitués d'une rampe d'arrivée d'eau sur le bas de la partie verticale et le système d'évacuation des eaux usées étant du type siphon comportant sur la partie basse du siphon une arrivée supplémentaire d'eau de rinçage.

La rampe d'arrivée d'eau est suffisante pour déplacer la litière et les excréments vers la canalisation d'évacuation des eaux usées, mais pour accélérer le processus de rinçage, il est préférable de prévoir sur la partie basse du siphon une arrivée supplémentaire d'eau. L'eau, aussi bien de la rampe que pour le siphon, est prise directement sur l'alimentation normale, c'est-à-dire à la pression du robinet.

Dans le système selon l'invention, on dispose d'un coffret de commande électrique qui pilote le fonctionnement automatique de l'appareil. A cet effet, il comporte un microprocesseur. Le coffret est relié à la cellule de détection de présence de l'animal, à une électrovanne commandant l'arrivée d'eau de rinçage, à une seconde électrovanne commandant l'arrivée d'eau dans le siphon et au système de dosage de litière.

Le fonctionnement du dispositif selon l'invention sera explicité en référence aux Figures.

La rampe d'arrivée d'eau comprend des buses réparties uniformément sur ladite rampe, sur toute la largeur de la partie horizontale et proches de ladite partie horizontale.

Le réservoir à litière et son système de dosage sont disposés dans la partie verticale au dessus de la rampe d'arrivée d'eau. La litière est du type biodégradable minéral ou végétal, de préférence végétal.

Le système de dosage de litière n'est pas critique. Il suffit que ce soit un système qui délivre chaque fois la même quantité de litière. On utilise par exemple un système de dosage du type à écluse. On prévoit dans le système deux cellules de détection de présence de l'animal, les cellules émettrices étant situées sur la partie verticale au dessus du système de dosage de litière et les cellules réceptrices sur la partie horizontale à l'opposé des rampes d'arrivée d'eau. Il faut en tout cas que ces cellules soient disposées de telle sorte que de manière sûre on puisse mettre en évidence la présence de l'animal en train de faire ses besoins.

Pour faciliter le nettoyage et le rinçage de la partie horizontale, on donne une certaine déclivité à cette partie, par exemple de l'ordre de 5 à 15° par rapport à l'horizontale. L'orifice du système d'évacuation des eaux usées est situé dans la partie la plus basse du plan sensiblement horizontal, à l'opposé de la rampe d'arrivée des eaux de rinçage.

On prévoit un réservoir à litière d'un volume compris entre 20 et 80 litres, de manière à ce que le système ait une bonne durée d'autonomie, par exemple de l'ordre de 40 jours si un seul chat utilise ledit système.

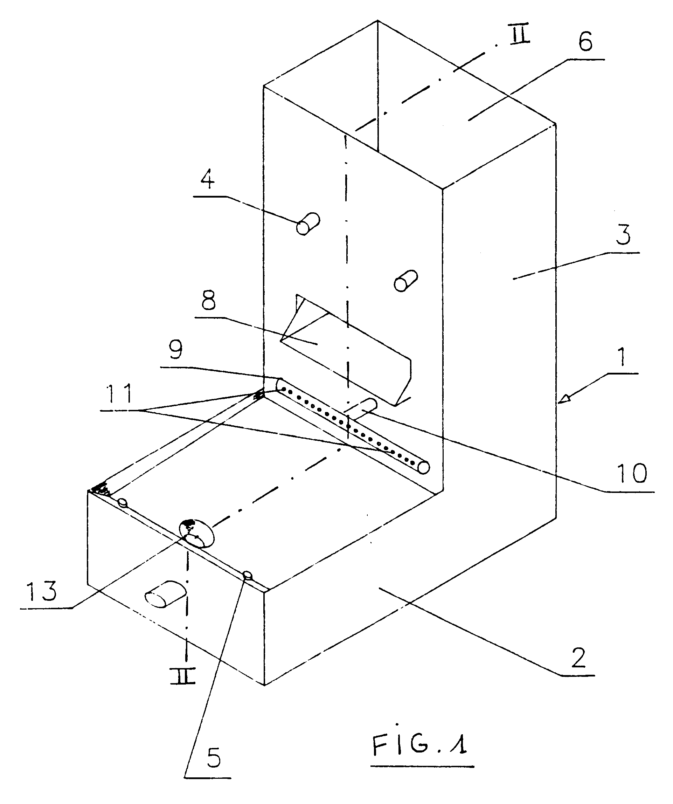

La suite de la description est faite en référence aux dessins sur lesquels:
**Fig 1**
   est une vue en perspective de l'appareil sanitaire selon l'invention,
**Fig 2**
   est une coupe selon le plan II-II de la Fig 1 et
**Fig 3**
   est un schéma de principe des circuits électroniques de l'appareil.

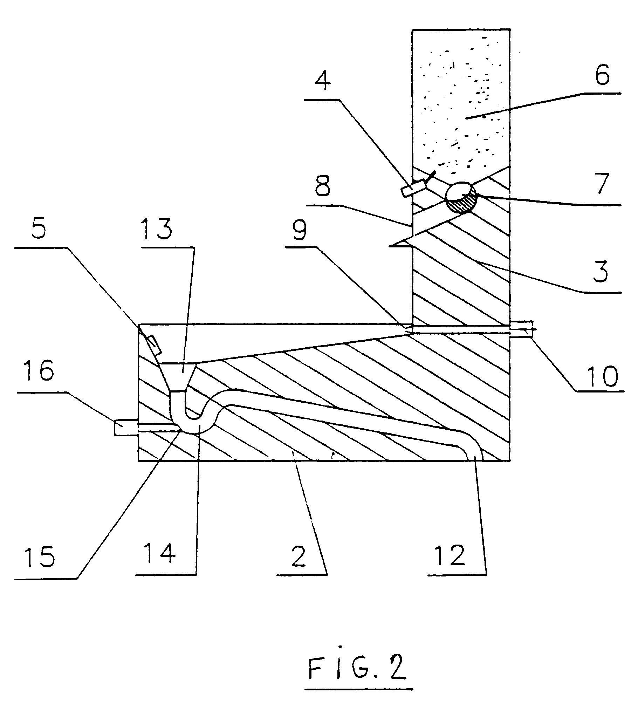

En référence aux Figs 1 et 2, l'appareil (1) selon l'invention comprend une partie horizontale (2) et une partie verticale (3). Les cellules émettrices (4) de présence de l'animal sont disposées dans la partie verticale (3) et les cellules réceptrices (5) dans la partie horizontale (2). Le réservoir à litière (6) comprend sur sa partie basse un système de dosage à écluse (7) et une embouchure (8) pour le déversement de ladite litière sur la partie horizontale (2). On voit bien sur les Figures la déclivité de la partie horizontale (2).

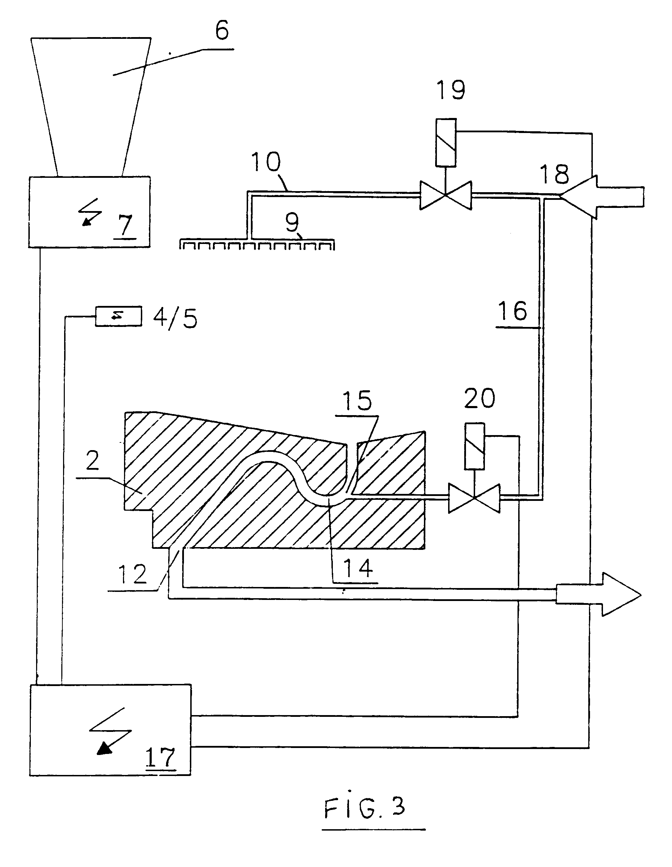

La rampe d'arrivée d'eau (9) est relièe à une conduite d'arrivée d'eau (10). Cette rampe comprend des buses (11) réparties uniformément. Ces buses peuvent avoir des diamètres de l'ordre de 5 mm. Le système d'évacuation des eaux usées (12) comprend un orifice d'évacuation (13) et un siphon (14). Dans le siphon (14), on prévoit une arrivée supplémentaire (15) d'eau de rinçage par une conduite (16). Le fonctionnement de l'appareil est expliqué en relation avec la Fig 3.

Le coffret de commande électrique (17) intégré dans l'appareil, par exemple sous le système de dosage de litière, pilote le fonctionnement automatique de l'appareil. Celui-ci est mis sous tension et raccordé au réseau d'eau par la conduite (18). Il se trouve d'abord en position d'attente d'un animal. Quand le chat arrive sur le plan horizontal (2), il est détecté par les cellules (4, 5). Après avoir fait ses besoins, il quitte la partie (2). Le microprocesseur du coffret (17) prévoit un temps d'attente d'éloignement du chat puis commande les électrovannes (19, 20) pour ouvrir les conduites d'arrivée d'eau respectivement (10, 16) de manière à éliminer la litière et les excréments. Le rinçage dure environ une minute et les électrovannes ferment les conduites d'arrivée d'eau.

On a alors une nouvelle temporisation pour le séchage de la partie horizontale et finalement le système de dosage de litière (7) tourne pour délivrer une quantité définie de litière sur la partie horizontale (2). L'appareil est alors à nouveau prêt pour recevoir un autre animal.

Dans un exemple de réalisation pratique de l'appareil selon l'invention, on lui donne une hauteur de 1,2 m une largeur de 0,5 m et une profondeur de 0,7 m. Le réservoir de litière a une contenance de 60 l. On prévoit des rinçages de 1 minute en délivrant 4 l d'eau pour chaque rinçage.

## Revendications

1. Appareil sanitaire pour chiens et chats, du type ouvert, comprenant une partie sensiblement plane et horizontale pour le stationnement de l'animal, une partie verticale solidaire de ladite partie horizontale, des moyens de rinçage raccordés à une arrivée d'eau et un système d'évacuation des eaux usées caractérisé en ce qu'il comprend en outre un réservoir à litière et son système de dosage pour la dépose de ladite litière sur la partie horizontale et au moins une cellule de détection de la présence de l'animal sur ladite partie horizontale, commandant, lorsque l'animal a quitté le plan horizontal, la séquence de rinçage et de réapprovisionnement de litière, les moyens de rinçage étant constitués d'une rampe d'arrivée d'eau sur le bas de la partie verticale et le système d'évacuation des eaux usées étant du type siphon comportant sur la partie basse du siphon une arrivée supplémentaire d'eau de rinçage.

2. Appareil sanitaire selon la revendication 1, caractérisé en ce que la rampe d'arrivée d'eau comprend des buses réparties uniformément sur ladite rampe.

3. Appareil sanitaire selon l'une des revendications 1 ou 2, caractérisé en ce que le réservoir à litière et son système de dosage sont disposés dans la partie verticale au dessus de la rampe d'arrivée d'eau.

4. Appareil sanitaire selon l'une quelconque des revendications 1 à 3, caractérisé en ce que le système de dosage de litière est du type à écluse.

5. Appareil sanitaire selon l'une quelconque des revendications 1 à 4, caractérisé en ce qu'il comprend deux cellules de détection de la présence de l'animal, les cellules émettrices étant situées sur la partie verticale et les cellules réceptrices sur la partie horizontale à l'opposé des rampes d'arrivée d'eau.

6. Appareil sanitaire selon l'une quelconque des revendications 1 à 5, caractérisé en ce que la partie horizontale a une déclivité comprise entre 5 et 15°.

7. Appareil sanitaire selon l'une quelconque des revendications 1 à 6, caractérisé en ce que le réservoir à litière a un volume compris entre 20 et 80 litres.

8. Appareil sanitaire selon l'une quelconque des revendications 1 à 7 caractérisé en ce qu'il comprend un coffret de commande électrique relié à la cellule de détection de présence de l'animal, à une électrovanne commandant l'arrivée d'eau de rinçage, à une seconde électrovanne commandant l'arrivée d'eau dans le siphon et au système de dosage de litière.

## Claims

1. An open toilet system for dogs and cats comprising a substantially flat and horizontal part for the animal to stand on, a vertical part integral with the horizontal part, flushing means connected to a water supply and a system for discharging the wastewater, characterized in that it additionally comprises a litter reservoir and an associated dispenser for placing litter on the horizontal part and at least one cell for detecting the presence of the animal on the horizontal part and for controlling the flushing and litter replacement sequence when the animal has left the horizontal part, the flushing means being formed by a water distributor at the bottom of the vertical part and the system for discharging the wastewater being of the siphon type comprising an additional inlet for flushing water at the lower end of the siphon.

2. A toilet system as claimed in claim 1, characterized in that the water distributor comprises nozzles distributed at regular intervals over its length.

3. A toilet system as claimed in claim 1 or 2, characterized in that the litter reservoir and its dispensing system are arranged in the vertical part above the water distributor.

4. A toilet system as claimed in any of claims 1 to 3, characterized in that the litter dispensing system is of the lock-gate type.

5. A toilet system as claimed in any of claims 1 to 4, characterized in that it comprises two cells for detecting the presence of the animal, the emitter cells being arranged on the vertical part and the receiver cells being arranged on the horizontal part opposite the water distributor.

6. A toilet system as claimed in any of claims 1 to 5, characterized in that the horizontal part has an inclination of 5 to 15°.

7. A toilet system as claimed in any of claims 1 to 6, characterized in that the litter reservoir has a capacity of 20 to 80 litres.

8. A toilet system as claimed in any of claims 1 to 7, characterized in that it comprises an electrical control box connected to the cell for detecting the presence of the animal, to an electromagnetic sluice valve controlling the delivery of flushing water, to a second electromagnetic sluice valve controlling the delivery of water to the siphon and to the litter dispensing system.

## Patentansprüche

1. Offene Toilette für Hunde und Katzen, umfassend einen im wesentlichen ebenen und horizontalen Teil zur Aufnahme des Tiers, einen mit dem horizontalen Teil fest verbundenen vertikalen Teil, an eine Wasserzufuhr angeschlossene Spüleinrichtungen und ein System zur Abführung des Brauchwassers, dadurch gekennzeichnet, daß sie außerdem einen Streubehälter und sein Dosiersystem zur Aufbringung von Streu auf den horizontalen Teil und mindestens eine Zelle zur Erfassung der Anwesenheit des Tiers auf diesem horizontalen Teil umfaßt, die, wenn das Tier die horizontale Ebenen verlassen hat, die Sequenz der Spülung und der Neuversorgung mit Streu auslöst, wobei die Spüleinrichtungen aus einem Wasserzufuhrrohr im unteren Teil des vertikalen Teils bestehen und das System zur Abführung des Brauchwassers vom Typ Siphon ist, der in seinem unteren Teil eine zusätzliche Spülwasserzufuhr besitzt.

2. Toilette nach Anspruch 1, dadurch gekennzeichnet, daß das Wasserzufuhrsrohr Düsen umfaßt, die auf diesem Rohr gleichmäßig verteilt sind.

3. Toilette nach Anspruch 1 oder 2, dadurch gekennzeichnet, daß der Streubehälter und sein Dosiersystem im vertikalen Teil oberhalb des Wasserzufuhrrohrs angeordnet sind.

4. Toilette nach einem der Ansprüche 1 bis 3, dadurch gekennzeichnet, daß das Streudosiersystem vom Typ Schleuse ist

5. Toilette nach einem der Ansprüche 1 bis 4, dadurch gekennzeichnet, daß sie zwei Zellen zur Erfassung der Anwesenheit des Tiers umfaßt, wobei die Sendezellen an dem vertikalen Teil und die Empfangszellen an dem horizontalen Teil auf der den Wasserzufuhrrohren entgegengesetzten Seite angeordnet sind.

6. Toilette nach einem der Ansprüche 1 bis 5, dadurch gekennzeichnet, daß der horizontale Teil eine Neigung von 5 bis 15° hat.

7. Toilette nach einem der Ansprüche 1 bis 6, dadurch gekennzeichnet, daß der Streubehälter ein Volumen von 20 bis 80 l hat.

8. Toilette nach einem der Ansprüche 1 bis 7, dadurch gekennzeichnet, daß sie einen elektrischen Steuerkasten besitzt, der mit der Zelle zur Erfassung der Anwesenheit des Tiers, mit einem die Spülwasserzufuhr steuernden Magnetventil, mit einem zweiten, die Wasserzufuhr im Siphon steuernden Magnetventil und mit dem Streudosiersystem verbunden ist.
